# EUROPEAN PATENT APPLICATION

(11) **EP 4 492 619 A1**
(43) Date of publication of application: **15.01.2025**
(21) Application number: 24179266.2
(22) Date of filing: 31.05.2024
(51) Int. Cl.: H02J 7/00, A01D 34/90, H02J 7/34

(54) **DEVICE FOR GARDENING AND/OR AGRICOLTURE AND ASSOCIATED STATION**

(30) Priority: 15.06.2023 IT 202300012297
(71) Applicant: Stiga S.p.A., 31033 Castelfranco Veneto (TV) (IT)
(72) Inventor: RIGONI, Mattia, 31015 Conegliano (TV) (IT); CAMERON, James, 31030 Casier (TV) (IT); TOLOTTO, Daniele, 31040 Chiarano (TV) (IT); MARTONE, Dario, 35138 Padova (PD) (IT); VILLANOVA, Marco, 31020 Sernaglia della Battaglia (TV) (IT)
(74) Representative: PGA S.p.A.

(57) **Abstract**

The invention relates to a device for gardening and/or agriculture (1), configured to be removably retained on a receiving installation (10, 10a, 10b) and comprising a body (2) configured to accommodate and/or retain an electrical power user (3); at least a first rechargeable battery (4) operatively connected to said electrical power user (3); at least one coupling element (5) configured to removably couple on the receiving installation (10, 10a, 10b) to obtain the removable retention of the device for gardening and/or agriculture (1); a battery charging unit (6), operatively connected to said at least a first rechargeable battery (4) and housed at least partially, preferably integrally, within said body (2).

## Description

### Technical field

The present disclosure relates to the field of devices for gardening and/or agriculture and further relates to the field of rechargeable batteries.

### Prior art

Devices are known for gardening and/or agriculture which are provided with rechargeable batteries. The rechargeable batteries are intended to power a power user of the device for gardening and/or agriculture.

Traditionally, the rechargeable batteries are housed in appropriate seats made on the body of the device for gardening and/or agriculture, and are intended to be removed when discharged.

In particular, after being removed from the respective seat on the body of the device for gardening and/or agriculture, the rechargeable bodies are connected to a battery charger which is configured to recharge them, at least partially.

Wired chargers adapted to accommodate one or more batteries of devices for gardening and/or agriculture at respective stations are known. Such battery chargers can create disorder, due to the presence of cables, and due to the fact that there are often worktops in which devices for gardening and/or agriculture, chargers and one or more rechargeable batteries are arranged in a disorderly manner.

The object of the present disclosure is to disclose a device for gardening and/or agriculture and a parking and/or charging installation which allow to solve the disadvantages disclosed above.

### Summary

The salient aspects of that which forms the object of the present disclosure are disclosed below. The aspects disclosed herein can be combined with each other and/or with portions of the detailed disclosure and/or the appended claims.

In accordance with the present disclosure, a device is disclosed herein for gardening and/or agriculture (1), configured to be removably retained by a parking and/or charging installation and comprising:
- a body (2),
- an electrical power user (3) housed in said body (2) and/or constrained to said body (2),
- at least one rechargeable battery (4) operatively connected to said electrical power user (3) and
- at least one coupling element configured to removably couple with said installation to make the removable retention of the device for gardening and/or agriculture (1),
characterized in that it further comprises a battery charging unit (6), operatively connected to said at least one rechargeable battery (4) and housed at least partially, preferably integrally, within said body (2).

According to a further non-limiting aspect, in accordance with the preceding aspect, said electrical power user (3) comprises an electric motor.

According to a further non-limiting aspect, in accordance with any one of the preceding aspects, said electric motor is a direct current electric motor.

According to a further non-limiting aspect, in accordance with any one of the preceding aspects, said electric motor is an alternating current electric motor.

According to a further non-limiting aspect, in accordance with any one of the preceding aspects, said electric motor is a brush motor.

According to a further non-limiting aspect, in accordance with any one of the preceding aspects, said electric motor is a brushless motor.

According to a further non-limiting aspect, in accordance with any one of the preceding aspects, said electric motor is a stepper motor.

According to a further non-limiting aspect, in accordance with any one of the preceding aspects, said at least one rechargeable battery (4) is removably retained by said body (2).

According to a further non-limiting aspect, in accordance with any one of the preceding aspects, said body (2) comprises at least one constraining element (7), in particular housing, configured to constrain said at least one rechargeable battery (4) in a predetermined position and/or spatial orientation with respect to said body (2).

According to a further non-limiting aspect, in accordance with any one of the preceding aspects, said at least one rechargeable battery (4) is a lithium-ion battery.

According to a further non-limiting aspect, in accordance with any one of the two preceding aspects, said constraining element (7) is substantially closed and/or configured to insulate said at least one rechargeable battery (4) in a watertight manner and/or in particular in which said at least one rechargeable battery (4) is a watertight battery.

According to a further non-limiting aspect, in accordance with any one of the three preceding aspects, said constraining element (7) is configurable in a closed operating configuration in which it insulates said at least one rechargeable battery (4) in a watertight manner and/or in which said at least one rechargeable battery (4) is a watertight battery.

According to a further non-limiting aspect, in accordance with any one of the four preceding aspects, said constraining element (7) is configurable in an open operating configuration in which it allows access to and/or the removal of said at least one rechargeable battery (4).

According to a further non-limiting aspect, in accordance with any one of the five preceding aspects, said constraining element (7) is configured and specifically intended to allow the retention of said at least one rechargeable battery (4) by means of insertion by translation, rotation or rototranslation.

According to a further non-limiting aspect, in accordance with any one of the preceding aspects, at least one among said body (2) and/or said constraining element (7) comprises an engagement element configured to allow said at least one rechargeable battery (4) to be locked in an operating connection position.

According to a further non-limiting aspect, in accordance with the preceding aspect, said engagement element is movable to allow to free said at least one rechargeable battery (4) from said operating connection position.

According to a further non-limiting aspect, in accordance with any one of the preceding aspects, in said operating connection position, said at least one rechargeable battery (4) can power said at least one electrical power user (3).

According to a further non-limiting aspect, in accordance with any one of the preceding aspects, said battery charging unit (6) is a low voltage unit.

According to a further non-limiting aspect, in accordance with any one of the preceding aspects, said battery charging unit (6) is configured to be powered by a power supply unit (11) comprising a voltage lowering transformer, and/or is a direct voltage unit, configured to be powered by a power supply unit (11) comprising an alternating voltage to direct voltage converter.

According to a further non-limiting aspect, in accordance with any one of the preceding aspects, said power supply unit (11) is operatively coupled with said installation, optionally said power supply unit (11) being at least partially housed in said installation.

According to a further non-limiting aspect, in accordance with any one of the preceding aspects, said battery charging unit (6) is configured to allow an operating disconnection and an operating reconnection of said at least one rechargeable battery (4) when powered by said power supply unit (11).

According to a further non-limiting aspect, in accordance with any one of the preceding aspects, said battery charging unit (6) is configured to be powered by means of wireless electromagnetic coupling with said power supply unit (11) and/or to be powered by direct electrical coupling with said power supply unit (11).

According to a further non-limiting aspect, in accordance with any one of the preceding aspects, said battery charging unit (6) is configured to electronically read a charge level of said at least one rechargeable battery (4) and to interrupt a power supply of said at least one rechargeable battery (4) when said charge level exceeds a preset threshold.

According to a further non-limiting aspect, in accordance with any one of the preceding aspects, said at least one rechargeable battery (4) is configured to be recharged by an external charging unit (20), operatively connected thereto as an alternative to said battery charging unit (6).

According to a further non-limiting aspect, in accordance with any one of the preceding aspects, the device for gardening and/or agriculture (1) is configured to be hand-held, and/or to be at least partially worn.

According to a further non-limiting aspect, in accordance with any one of the preceding aspects, said device for gardening and/or agriculture (1) is a device for cutting the lawn, in particular a lawnmower, optionally automatic, or device for trimming lawns and hedges, in particular a hedge trimmer or a turf trimmer or a brush cutter, or a device for timber and pruning, in particular a branch cutter, or a bio-grinder, or a chainsaw, or a cleaning device, in particular a blower or aspirator, or a shredder, or a pressure washer, or a sweeper or a snow plough, or a device for preparing soil, in particular an aerator or scarifier or a tiller, or a device for irrigating or distributing substances, in particular a sprinkler, or a pump or an atomiser, or a pump for distributing anti-fungal substances, or a device for scanning and/or inspecting soils, in particular a device for searching for metals.

According to a further non-limiting aspect, in accordance with any one of the preceding aspects, said coupling element (5) comprises at least one among a pin, a recess, at least one guide, configured to removably couple with a respective recess, pin or counter-guide obtained on said installation.

According to a further non-limiting aspect, in accordance with any one of the preceding aspects, said coupling element is made of one among a plastic material, metallic material, or glass fibre material, and/or comprises at least one reinforcement portion in metallic material.

In accordance with the present disclosure, a parking and/or charging installation is further disclosed which is configured to cooperate with a device for gardening and/or agriculture (1) in accordance with one or more of the aspects disclosed herein, in which the installation comprises:
- a casing,
- a power supply unit (11) at least partially housed in said casing and configured to provide electrical power to a battery charging unit (6) of said device for gardening and/or agriculture (1) with an electrical signal intended for charging at least one battery of said device for gardening and/or agriculture (1), and
- an engagement element (12) associated with said casing and configured to removably engage with at least part of said device for gardening and/or agriculture (1) in at least one predefined positional relationship with respect to said casing.

According to a further non-limiting aspect, in accordance with the preceding aspect, the parking installation (10, 10a, 10b) is configured to cooperate with a device for gardening and/or agriculture (1) in accordance with one or more of the aspects disclosed herein.

According to a further non-limiting aspect, in accordance with any one of the two preceding aspects, said power supply unit (11) comprises a first electronic conditioning circuit of said electrical signal, said first electronic conditioning circuit being configured to cooperate with a second conditioning circuit of said electrical signal.

According to a further non-limiting aspect, in accordance with any one of the three preceding aspects, said second conditioning circuit of said electrical signal is housed on said battery charging unit (6).

According to a further non-limiting aspect, in accordance with any one of the four preceding aspects, the parking installation (10, 10a, 10b) is made of plastic material and/or glass fibre.

According to a further non-limiting aspect, in accordance with any one of the five preceding aspects, said casing comprises and/or defines at least a base portion (10a) and a contact portion (10b).

According to a further non-limiting aspect, in accordance with any one of the six preceding aspects, said parking and/or charging installation (10, 10a, 10b) comprises a base portion (10a), preferably configured to be fixed to a wall, and at least one contact portion (10b) having said engagement element (12).

According to a further non-limiting aspect, in accordance with one of the two preceding aspects, at least one among the base portion (10a) and the contact portion (10b) is made of plastic material or glass fibre.

According to a further non-limiting aspect, in accordance with any one of the three preceding aspects, the parking installation (10, 10a, 10b) or at least among between the base portion (10a) and the contact portion (10b), is made by means of a moulding production process.

According to a further non-limiting aspect, in accordance with any one of the nine preceding aspects, said power supply unit (11) is a wireless power supply unit comprising an electrical energy transfer element for electromagnetic coupling (11m) and/or is a power supply unit with direct electrical connection, comprising an electrical energy transfer element for direct electrical coupling (11e).

According to a further non-limiting aspect, in accordance with the preceding aspect, said electrical energy transfer element for electromagnetic coupling (11m) and/or electrical energy transfer element for direct electrical coupling (11e) transfers, in use, electrical energy for wireless electromagnetic coupling and/or for direct contact.

According to a further non-limiting aspect, in accordance with any one of the two preceding aspects, said electrical energy transfer element for electromagnetic coupling (11m) and/or said electrical energy transfer element for direct electrical coupling (11e) is a bipolar element and is configured to transport a first electrical or electromagnetic power signal for recharging said at least one rechargeable battery (4) and a second control signal for controlling said at least one rechargeable battery (4).

According to a further non-limiting aspect, in accordance with any one of the twelve preceding aspects, said engagement element (12) comprises at least one positioning member such as a guide and/or a recess and/or a protrusion.

According to a further non-limiting aspect, in accordance with any one of the thirteen preceding aspects, said engagement element (12) comprises an abutment (12r) defining an operating mutual coupling position in which said device for gardening and/or agriculture (1) and said installation is defined by an abutment (12r) arranged adjacent to said housing, in which, in said operating mutual coupling position, said device for gardening and/or agriculture (1) is in a predefined spatial arrangement with respect to said installation.

According to a further non-limiting aspect, in accordance with the preceding aspect, said electrical energy transfer element for electromagnetic coupling (11m) and/or said electrical energy transfer element for direct electrical coupling (11e) is arranged substantially at said abutment (12r) and/or said installation comprises detection means adapted to discriminate said operating mutual coupling position from different positions of said device for gardening and/or agriculture (1) with respect to said installation and in which said installation is configured to subordinate an electrical power supply to said device for gardening and/or agriculture (1) by means of said power supply unit (11) to a detection of said mutual coupling position by said detection means.

According to a further non-limiting aspect, in accordance with any one of the six preceding aspects, said engagement element (12) houses said electrical energy transfer element for electromagnetic coupling (11m) and/or said electrical energy transfer element for direct electrical coupling (11e), preferably in a protected position.

According to a further non-limiting aspect, in accordance with any one of the sixteen preceding aspects, said installation, in particular said engagement element (12), is configured to bear the weight of said device for gardening and/or agriculture (1).

According to a further non-limiting aspect, in accordance with any one of the seventeen preceding aspects, optionally in said operating mutual coupling position said device for gardening and/or agriculture (1) is hung from said installation and/or optionally said installation is configured to be hung from an infrastructure such as a wall or a pole.

According to a further non-limiting aspect, in accordance with any one of the thirteen preceding aspects, said base portion (10a) is provided with a plurality of seats (10s) for a plurality of said contact portions (10b) and is configured to simultaneously house a plurality of said contact portions (10b) and/or to house said contact portion (10b) at a plurality of distinct positions determined by said seats (10s).

According to a further non-limiting aspect, in accordance with the preceding aspect, said seats (10s) are arranged along a predefined alignment direction.

According to a further non-limiting aspect, in accordance with any one of the two preceding aspects, said contact portion (10b) comprises at least one coupling element configured to couple with said seats (10s).

According to a further non-limiting aspect, in accordance with any one of the three preceding aspects, said contact portion (10b) is removably operatively connectable to at least one seat of said seats (10s).

According to a further non-limiting aspect, in accordance with any one of the four preceding aspects, said plurality of seats (10s) comprises a plurality of recesses, in particular a respective plurality of recesses.

According to a further non-limiting aspect, in accordance with any one of the five preceding aspects, the contact portion (10b) comprises at least one coupling element (10w) configured to couple with at least one seat of said plurality of seats (10s) of said base portion (10a).

According to a further non-limiting aspect, in accordance with any one of the six preceding aspects, said coupling element (10w) has a shape replicating, preferably in concavity or in convexity, the shape of a seat (10s).

According to a further non-limiting aspect, in accordance with any one of the two preceding aspects, said coupling element (10w) comprises a convexity.

According to a further non-limiting aspect, in accordance with any one of the three preceding aspects, said at least one coupling element (10w) is positioned at a rear portion of said contact portion (10b) and/or is positioned at a guide element of said contact portion (10b) intended to allow the translation of said contact portion (10b) with respect to said base portion (10a).

According to a further non-limiting aspect, in accordance with any one of the twenty-seven preceding aspects, the parking and/or charging installation (10, 10a, 10b) comprises an accessory support (10c) configured to be operatively coupled to the base portion (10a).

According to a further non-limiting aspect, in accordance with the preceding aspect, the accessory support (10c) is configured to retain a tool, for example a gardening tool.

According to a further non-limiting aspect, in accordance with any one of the two preceding aspects, said accessory support (10c) comprises a recess, for example identifying a cavity, preferably axially oriented vertically.

According to a further non-limiting aspect, in accordance with any one of the three preceding aspects, said accessory support (10c) comprises a magnetic retention means, or at least a seat, for tools.

According to a further non-limiting aspect, in accordance with any one of the two preceding aspects, said cavity is substantially peripherally closed.

According to a further non-limiting aspect, in accordance with any one of the five preceding aspects, said accessory support (10c) comprises a front portion on which said recess, or said magnetic means or said seat is present.

According to a further non-limiting aspect, in accordance with any one of the six preceding aspects, said accessory support (10c) comprises an opposite rear portion with respect to the front portion.

According to a further non-limiting aspect, in accordance with the preceding aspect, the rear portion comprises at least one coupling element (10w) configured to couple with at least one respective seat (10s) of said base portion (10a).

According to a further non-limiting aspect, in accordance with any one of the eight preceding aspects, the accessory support (10c) is made of plastic material, for example by injection moulding, or said accessory support (10c) is made of glass fibre.

According to a further non-limiting aspect, in accordance with any one of the nine preceding aspects, at least part of said accessory support (10c) is flexible, elastic or soft.

According to a further non-limiting aspect, in accordance with any one of the ten preceding aspects, said support (10c) identifies a substantially deformable retention wall of said tool.

According to a further non-limiting aspect, in accordance with any one of the thirty-eight preceding aspects, said engagement element (12) is configured to allow a translation, preferably substantially linear, of said device for gardening and/or agriculture (1) with respect to the body of said parking and/or charging installation (10, 10a, 10b).

According to a further non-limiting aspect, in accordance with any one of the thirty-nine preceding aspects, said engagement element (12) comprises a first and a second guide opposite each other, adapted to define a translation direction for said device for gardening and/or agriculture (1), and/or is configured to allow a rotation, preferably a rotation along an oblique direction with respect to said translation, of said device for gardening and/or agriculture (1) with respect to the body of said parking and or charging installation (10, 10a, 10b).

According to a further non-limiting aspect, in accordance with any one of the thirty-two preceding aspects, said electrical energy transfer element for electromagnetic coupling (11m) and/or said electrical energy transfer element for direct electrical coupling (11e), is arranged substantially at said abutment (12r), and projects with respect to said abutment (12r).

According to a further non-limiting aspect, in accordance with any one of the thirty-three preceding aspects, said electrical energy transfer element for electromagnetic coupling (11m) and/or said electrical energy transfer element for direct electrical coupling (11e) is substantially bipolar.

According to a further non-limiting aspect, in accordance with any one of the thirty-four preceding aspects, said electrical energy transfer element for electromagnetic coupling (11m), and/or said electrical energy transfer element for direct electrical coupling (11e) is configured to transport a first electrical or electromagnetic power signal for recharging said at least a first rechargeable battery (4) and a second control signal for said at least a first rechargeable battery (4).

According to a further non-limiting aspect, in accordance with any one of the thirty-nine preceding aspects, at least one among said base portion (10a) and said contact portion (10b) comprises at least one respective cable guide (10z, 10k) configured to retain at least one among:
- an electrical power supply cable, configured to transmit said electrical signal, optionally an electrical power supply cable (50) in use sandwiched between said base portion (10a) and said contact portion (10b) and connected:
   - at a first portion thereof, to said electrical energy transfer element for electromagnetic coupling (11m) and/or to said electrical energy transfer element for direct electrical coupling (11e),
   - at a second portion thereof, distinct from said first portion, to said power supply unit (11).

According to a further non-limiting aspect, in accordance with the preceding aspect, said cable guide (10z, 10k) is configured to further retain an auxiliary conductor, in particular at least one among a hydraulic conductor, an electrical conductor, a conductor for optical signals, and/or said cable guide (10z, 10k) is configured to prohibit at least a relative translation of a portion of said electrical power supply cable substantially positioned at, or enclosed within, said at least one among said base portion (10a) and said contact portion (10b).

According to a further non-limiting aspect, in accordance with any one of the two preceding aspects, the cable guide (10k) of the base portion (10a) extends along a direction which is substantially inclined with respect to said main or front face (10g) of the base portion (10a).

In accordance with the present disclosure, a kit is further disclosed comprising a device for gardening and/or agriculture (1) in accordance with one or more of the aspects disclosed herein, and a parking installation (10, 10a, 10b) in accordance with one or more of the aspects disclosed herein.

### Figures

The disclosure will be given below on one or more specific embodiments of the object of the present disclosure. The disclosure refers to the attached figures, a brief disclosure of which is provided below.
Figure 1 illustrates a non-limiting embodiment of a device for gardening and/or agriculture in accordance with the present disclosure.
Figure 2 illustrates a perspective view of another type of device for gardening and/or agriculture in accordance with the present disclosure, coupled to a parking installation, also part of the present disclosure.
Figure 3 illustrates a perspective view of a detail of the parking installation.
Figure 4 illustrate a perspective view of a part of the parking installation.
Figure 5 illustrates a further perspective view of a further part of the parking installation.
Figure 6 illustrates a perspective view of a coupling element of the parking installation from a first observation direction.
Figure 7 illustrates a perspective view of a coupling element of the parking installation from a second observation direction.
Figure 8 illustrates a perspective view of a detail of the coupling element, from which a retention portion of a power supply cable can be derived.
Figure 9 illustrates a further front view of the coupling element.
Figure 10 illustrates a circuit diagram of a battery charger partially located on the parking installation and partially arranged within said device for gardening and/or agriculture.

### Detailed description

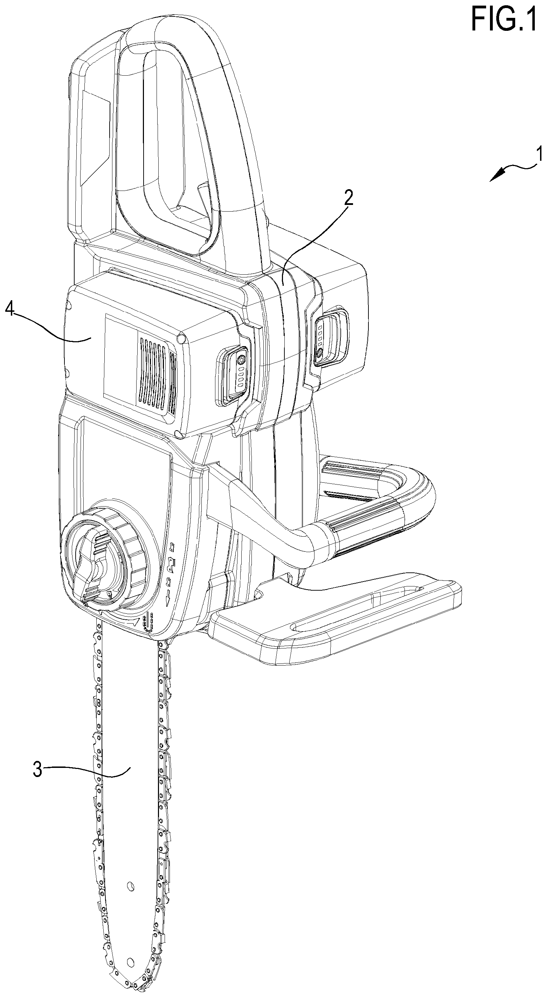

In figure 1, the reference numeral 1 identifies a specific embodiment of a tool for gardening and/or agriculture: an electrical chainsaw.

The device 1 comprises a body 2, a power user 3 and a rechargeable battery 4. In the embodiment of figure 1, the power user 3 is an electric motor for rotating the chain.

Examples of electric motors which can be installed on the device for gardening and/or agriculture 1 which is the subject matter of the present disclosure can be of the direct current, alternating current, brushed, brushless, stepper type.

In the embodiment of figure 1, the rechargeable battery 4 is removably housed in a substantially outer portion of said body 2.

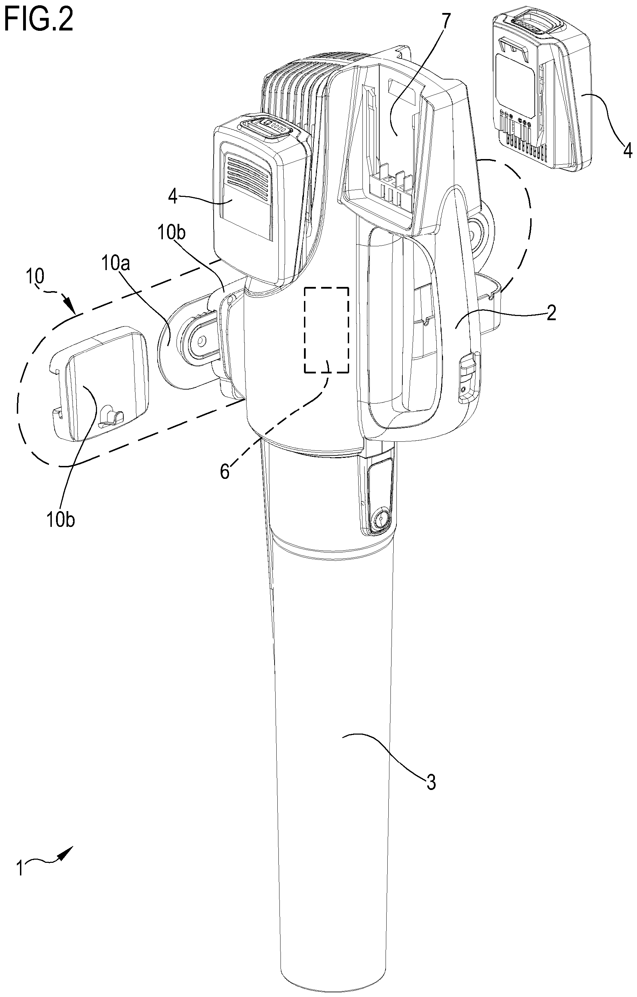

In figure 2, a further embodiment of a tool for gardening and/or agriculture is identified with the reference numeral 1: a blower.

The device 1 comprises a body 2, a power user 3 and a first and a second rechargeable battery 4. In the embodiment of figure 2, the power user 3 is an electric motor for rotating a fan of the blower.

The rechargeable batteries 4 are removably housed at a respective first and second substantially outer portion of said body 2. The first and the second portion are substantially opposite and placed near a handle of the device for gardening and/or agriculture 1.

The reference numeral 7 indicates the seats (constraining elements) for the rechargeable batteries 4. According to the specific power needs required by the device for gardening and/or agriculture 1, there can be a single seat 7 for a single rechargeable battery 4 on the body 2, or a plurality of seats 7 for a respective plurality of rechargeable batteries 4.

In figure 2 the reference numeral 10 identifies a parking installation, which (see detailed description below) comprises at least two portions:
- a base portion 10a, preferably configured to be fixed to a wall,
- at least one contact portion 10b having an engagement element 12 for allowing to connect the device for gardening and/or agriculture 1.

In an embodiment, the casing of the parking installation comprises the base portion 10a and the contact portion 10b.

In general, the device for gardening and/or agriculture 1 can be configured to be hand-held, and/or to be at least partially worn.

In a non-limiting manner, said device for gardening and/or agriculture 1 is for example a device for cutting the lawn, in particular a lawnmower, optionally automatic, or device for trimming lawns and hedges, in particular a hedge trimmer or a turf trimmer or a brush cutter, or a device for timber and pruning, in particular a branch cutter, or a bio-grinder, or a chainsaw, or a cleaning device, in particular a blower or aspirator, or a shredder, or a pressure washer, or a sweeper or a snow plough, or a device for preparing soil, in particular an aerator or scarifier or a tiller, or a device for irrigating or distributing substances, in particular a sprinkler, or a pump or an atomiser, or a pump for distributing anti-fungal substances. The device for gardening and/or agriculture can also be a device for scanning and/or inspecting soils, in particular a device for searching for metals.

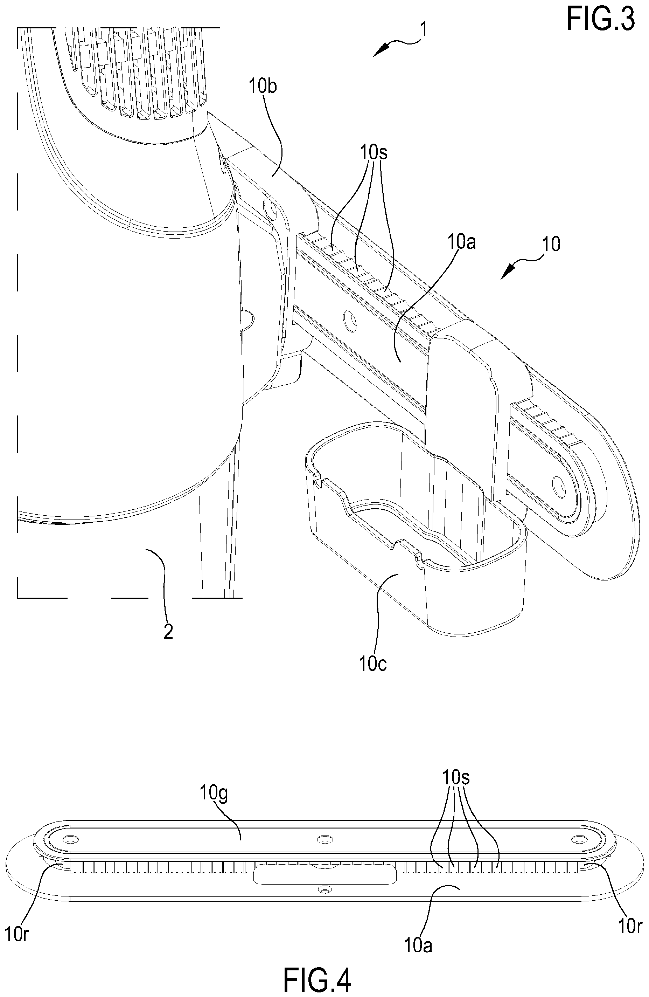

The perspective view of figure 3 illustrates a particular and non-limiting embodiment of the parking installation 10, 10a, 10b, in which a plurality of seats 10s of the base portion 10a are visible.

The overall assembly formed by the plurality of seats 10s allows to accommodate a contact portion 10b in a plurality of distinct positions on said support portion and/or allows to simultaneously accommodate a plurality of contact portions 10b.

Preferably, but not limitedly, the parking installation 10, 10a, 10b is made of plastic material; in a non-limiting embodiment, at least one among the base portion 10a and the contact portion 10b is made of plastic material, for example by means of a moulding production process. For example, it is possible to make the contact portion 10b by injection moulding. Making the parking installation, in whole or in part, by means of plastic material, and in particular by injection moulding advantageously allows to produce a large number of pieces at low cost, while maintaining a high production quality. It is noted that the plastic material can be replaced by equivalent glass fibre, even reinforced.

The use of plastic material prevents the transmission of electrical currents to the operator, in particular where the electrical conductors which are present on the parking installation are partially uncovered. In an embodiment, at least part of the parking installation 10, 10a, 10b, and preferably at least the surface portions thereof, susceptible in use to come into contact with parts of the body of the operator, are electrically insulating.

In an embodiment, the plurality of seats 10s can be arranged along a predefined alignment direction. Preferably, the predefined alignment direction is an axial direction oriented along a substantially horizontal plane in use, or in any case in a maximum extension direction of the base portion 10a. In other words, this means that the contact portion 10b can translate, preferably horizontally, along the base portion 10a.

In an embodiment, the contact portion 10b comprises at least one coupling element 10w configured to couple with said plurality of seats 10s and is removably operatively connectable to at least one seat of said plurality of seats 10s.

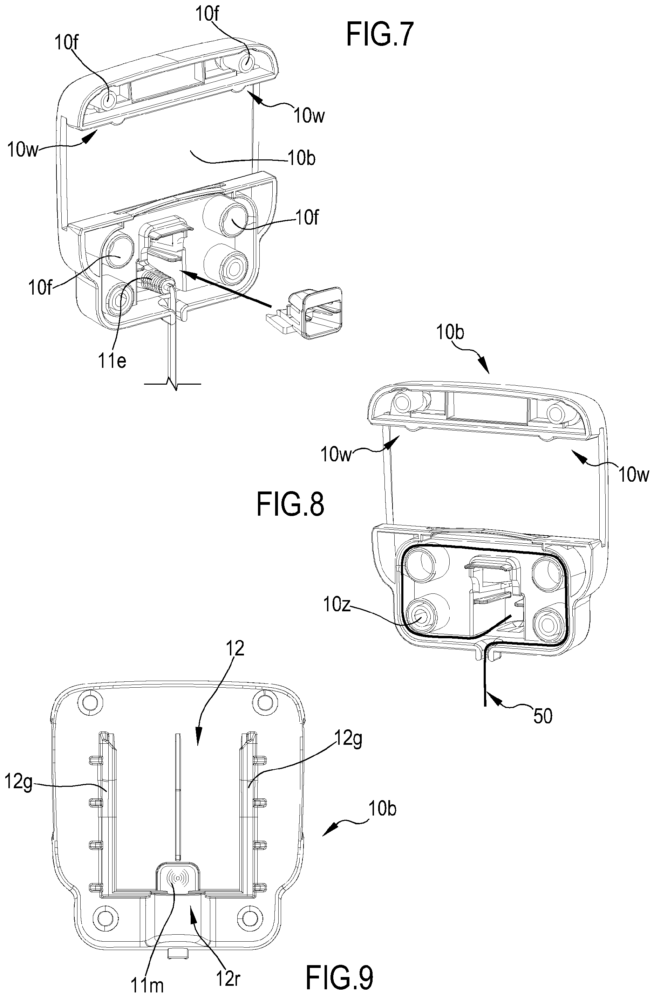

As schematically depicted in figures 3 and 7, in a preferred embodiment, the seats 10s each comprise a recess which preferably takes a semicircular shape. The coupling element 10w is a protrusion of a preferably substantially semicircular shape extending from a guide portion of the contact portion 10b.

In detail, figure 7 illustrates an embodiment of the contact portion 10b whose body identifies, at the rear, a guide portion extending substantially horizontally and identifying a recess within which a pair of coupling elements 10w projects. The pair of coupling elements 10w is arranged on an upper side wall of the recess. This must not be understood in a limiting manner, since further arrangements of the coupling elements 10w, for example at a lower side wall of the recess, are also possible.

The guide portion is that which allows the translation of the contact portion 10b with respect to the support portion 10a.

In an embodiment, the contact portion 10b can be provided with a removable locking element, for example a spring-loaded button which is positioned at a side portion, in particular an upper side zone of the contact portion 10b. Such a locking element has an unstable configuration in which it allows the movement of the contact portion 10b with respect to the base portion 10a, and in which it also allows the removal of the contact portion 10b from the base portion 10a, and a stable position in which it constrains the contact portion 10b in a certain position on the base portion 10a. In an embodiment such a locking element can be configured to push the coupling elements 10w against the respective seats 10s.

Furthermore, it is possible to have an embodiment in which the seats 10s each comprise a plurality of protrusions, preferably of substantially semicircular shape, and the coupling elements 10w are made by recesses, preferably of substantially semicircular shape.

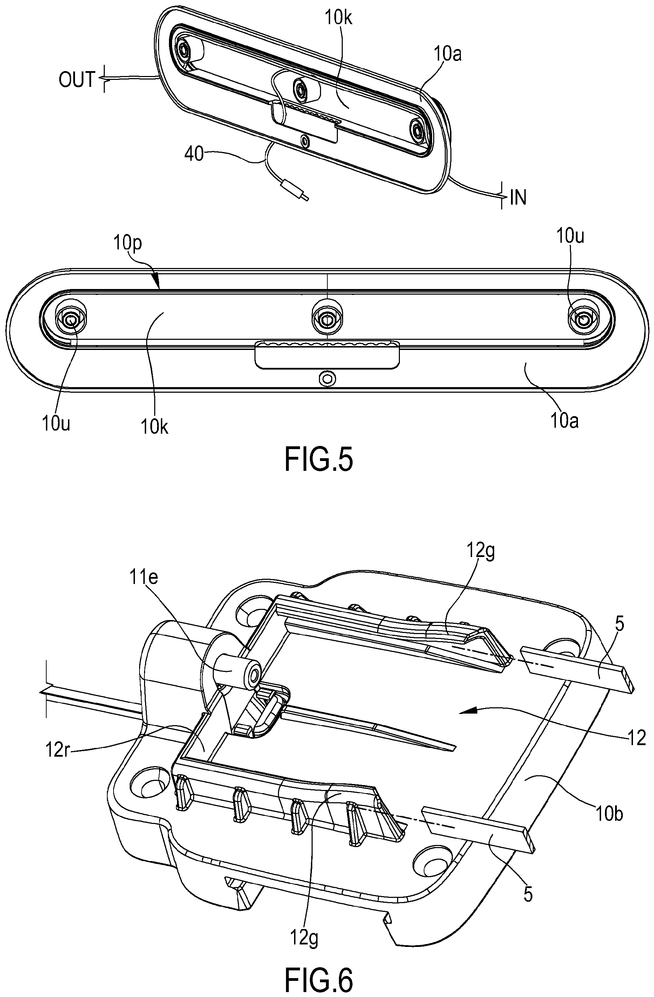

Figures 4 and 5 illustrate a non-limiting embodiment of a base portion 10a which can comprise a cable guide 10k. Preferably, but not limitedly, the cable guide 10k is arranged at a substantially rear portion of the base portion 10a.

The cable guide 10k comprises a guide 10p substantially extending along a linear direction which is almost horizontal in use and further comprises at least one, preferably a pair of, hole(s) 10r.

The cable guide 10k is configured to allow a portion of a cable or conduit to pass behind a front portion of the base portion 10a and to allow said cable or conduit to exit laterally with respect to said front portion of the base portion 10a, precisely by means of the holes 10r.

The holes 10r are preferably slotted, i.e., they have a maximum extension direction which makes them oblong; this allows the passage of cables even of important section and/or allowing the passage of cables headed on connectors even of significant dimensions with respect to the cable itself without requiring the removal thereof.

The holes 10r extend along a substantially orthogonal direction with respect to a maximum extension plane of the base portion 10a. Such a maximum extension plane is the plane on which the main or front face 10g of the base portion 10a lies. By virtue of this technical feature, the front portion 10g of the base portion 10a is as free as possible from technical elements and is therefore aesthetically pleasing.

In particular, the cable guide 10, is configured to retain at least one among:
- an electrical power supply cable, configured to transmit said electrical signal,
- an auxiliary conductor, in particular at least one among a hydraulic conductor, an electrical conductor, a conductor for optical signals.

The cable guide 10k is configured and specifically intended to prevent at least a relative translation of a portion of said electrical power supply cable substantially positioned at, or enclosed within, said base portion 10a. In particular, this is made possible by the fact that the cable guide 10k can be configured to allow to make a ring substantially closed to said electrical power supply cable.

In a non-limiting embodiment, the base portion 10a comprises a main hole arranged at the lower portion of its body. The main hole extends in a substantially orthogonal direction with respect to the extension direction of the side holes 10r.

Auxiliary holes 10u are arranged on the body of the base portion 10a; the auxiliary holes are configured and specifically intended to allow the positioning of the base portion 10a on a wall. The auxiliary holes 10u can be of the through type and extend with an axis thereof in an orthogonal direction with respect to a substantial maximum extension plane of the base portion 10a.

It is therefore clear that an embodiment of the parking installation is configured to bear the weight of said device for gardening and/or agriculture 1. This means that in an operating mutual coupling position, said device for gardening and/or agriculture 1 is hung and said parking installation 10, 10a, 10b is configured to be hung.

Since the contact portion 10b unloads all its weight, and where connected also unloads the weight of the device for gardening and/or agriculture 1, on the base portion 10a, it can be understood that in a non-limiting embodiment the contact portion 10b is configured to support the entire weight of the device for gardening and/or agriculture 1. For the purposes of the present disclosure, it is therefore understood that "hung" implies the unloading of the weight of the device disclosed herein on the parking installation 10, 10a, 10b.

In particular, the seats 10s on which the contact portion 10b is arranged must be able to support, in a specific embodiment, the sum of the weight of the contact portion 10b and of the device disclosed herein.

In figure 2 there is an accessory support 10c; the accessory support 10c is configured to be operatively coupled to the base portion 10a in a manner completely similar to the contact portion 10b.

The accessory support 10c is configured to retain a tool such as, but not limitedly, gardening scissors. To this end, it comprises a recess, for example identifying an axially vertically oriented cavity, or a magnetic retention means or other suitable seats for tools. Figure 2 illustrates an embodiment in which a substantially peripherally closed cavity recess is present.

The accessory support 10c has a front portion on which said recess, or said magnetic means or said seat is present, and a rear portion opposite the front portion. The rear portion can comprise at least one coupling element 10w configured to couple with said plurality of seats 10s and is removably operatively connectable to at least one seat of said plurality of seats 10s. With regard to the specific detailed technical features of some embodiments of the coupling element 10w, reference is made to the portion of the disclosure related to the coupling element 10w for the contact portion 10b.

The accessory support 10c can be made of plastic material. In an embodiment it is made by means of a moulding production process, for example injection moulding. The accessory support 10c can also be made of glass fibre.

In an embodiment which is not intended to be limiting, the accessory support 10c identifies a retention wall for a tool; the retention wall which retains the tool is elastic or in any case can be made of substantially soft material, therefore deformable. Spongy elements, e.g., made of neoprene or the like, can be arranged within the retention wall which retains the tool.

Figure 6 illustrates a perspective view of a non-limiting embodiment of a contact portion 10b. In such an embodiment, it is observed that the aforementioned engagement element 12 is arranged on the contact portion 10b. In general, the engagement element 12 comprises at least one among a guide, a recess, a protrusion; in the embodiment illustrated in figure 6 it comprises a pair of opposite and substantially parallel guides which, in use, engage on respective counter-guides arranged on the body 2 of the device for gardening and/or agriculture 1. The opposite guides, which in figure 6 are indicated with the reference number 12g, guide the body 2 in sliding towards an abutment 12r which is made by a substantially inclined bottom wall, in particular substantially orthogonal, with respect to the guides 12g.

The engagement element 12, also thanks to the presence of the guides 12g and the abutment 12r, defines an operating coupling position in which said device for gardening and/or agriculture 1 is in a predefined spatial arrangement with at least one among said base portion 10a and said contact portion 10b. In the embodiment of figure 6, the guides 12g project orthogonally with respect to a front plane of the contact portion 10b.

Regardless of whether the engagement element 12 is arranged on the contact portion 10b or on the base portion 10a, said engagement element 12 preferably comprises an electrical energy transfer element for electromagnetic coupling 11m and/or an electrical energy transfer element for direct electrical coupling 11e, preferably in a protected position.

In a non-limiting embodiment, the electrical energy transfer element for electromagnetic coupling 11m comprises an electromagnetic connector which transfers electrical energy (signal) for recharging the rechargeable battery 4 by means of an at least partially wireless channel.

In a non-limiting embodiment, the electrical energy transfer element for direct electrical coupling 11e comprises a connector, preferably metallic, which in figure 6 is a male connector projecting along a substantially inclined direction, and preferably substantially orthogonal, with respect to the abutment 12r.

In an embodiment, which is depicted in figure 6, the electrical energy transfer element for direct electrical coupling 11e is arranged substantially at said abutment 12r and extends along a direction substantially parallel to the direction of the guides 12g.

The electrical energy transfer element for direct electrical coupling 11e (connector) is connected to a portion, in particular an end, of electrical power cable 50 in use sandwiched between said base portion 10a and the contact portion 10b.

In an embodiment, the electrical energy transfer element for electromagnetic coupling 11m, and/or the electrical energy transfer element for direct electrical coupling 11e is at least bipolar and is configured to transport a first electrical or electromagnetic power signal for recharging said at least a first rechargeable battery 4 and a second control signal for said at least a first rechargeable battery 4.

Alternatively, or in combination with the above, the engagement element 12 can be configured to allow a rotation, preferably a rotation along an oblique direction with respect to said translation, of said device for gardening and/or agriculture 1 with respect to the body of said parking and/or charging installation 10, 10a, 10b.

From the electrical point of view, said power supply unit 11 comprises a first electronic conditioning circuit for electrical signal which is intended to at least partially recharge the at least one rechargeable battery 4 which meanwhile is kept installed on the device for gardening and/or agriculture 1.

In detail, the first electronic conditioning circuit is configured to cooperate with a second conditioning circuit of said electrical signal; said second conditioning circuit of said electrical signal is housed on the battery charging unit 6 which is arranged on the device for gardening and/or agriculture 1. This technical feature implies that the battery charging electronics are shared between the parking and/or charging installation 10, 10a, 10b and the device for gardening and/or agriculture 1.

This allows to reduce the production cost, therefore the cost for the end user, of the parking and/or charging installation 10, 10a, 10b which - with respect to different solutions - does not need to have all the electronics on board which would otherwise be intended to charge the rechargeable batteries 4.

Furthermore, the claimed technical solution advantageously allows to eliminate the need to disconnect the rechargeable batteries 4 from the respective seats of the device for gardening and/or agriculture 1.

In addition to simplifying the operator's use of the latter, the technical feature highlighted above makes the device for gardening and/or agriculture 1 a "partial" battery charger.

In a non-limiting embodiment, the power supply unit 11 comprises a voltage lowering transformer, and/or is a powered unit in use with alternating voltage and can comprise an alternating voltage to direct voltage converter.

In a non-limiting embodiment, the power supply unit 11 is operatively coupled with, optionally at least partially housed in the body of the parking installation 10, 10a, 10b. Preferably, but non limitedly, it is housed in the base portion 10a.

In an alternative embodiment, the power supply unit 11 comprises a voltage lowering transformation unit made as a transformer which is movably connectable with respect to the body of the parking installation 10, 10a, 10b, and in particular with respect to the base portion 10a and the contact portion 10b.

In a non-limiting embodiment, the power supply unit is configured and specifically intended to allow the recharging of lithium batteries. In a non-limiting embodiment, the lithium battery can be a Lithium - Cobalt - Oxide (LiCoO₂), Lithium - Manganese - Oxide (LiMn₂O₄), Lithium - Iron - Phosphate (LiFePO₄), Lithium with Nickel - Manganese - Cobalt (LiNi ₓMn_{y}Co_{z}O₂) or Lithium with Nickel - Cobalt - Aluminium (LiNiCoAlO ₂) or Lithium titanate (Li₄Ti₅O₁₂) battery.

The power supply unit 11 can comprise or be operatively connected with indicators, for example LED or equivalent visual indicators, including LCD displays, and/or with audio indicators, adapted to allow the user to identify one or more particular configurations or charge levels for the at least one rechargeable battery 4 arranged on the device for gardening and/or agriculture 1.

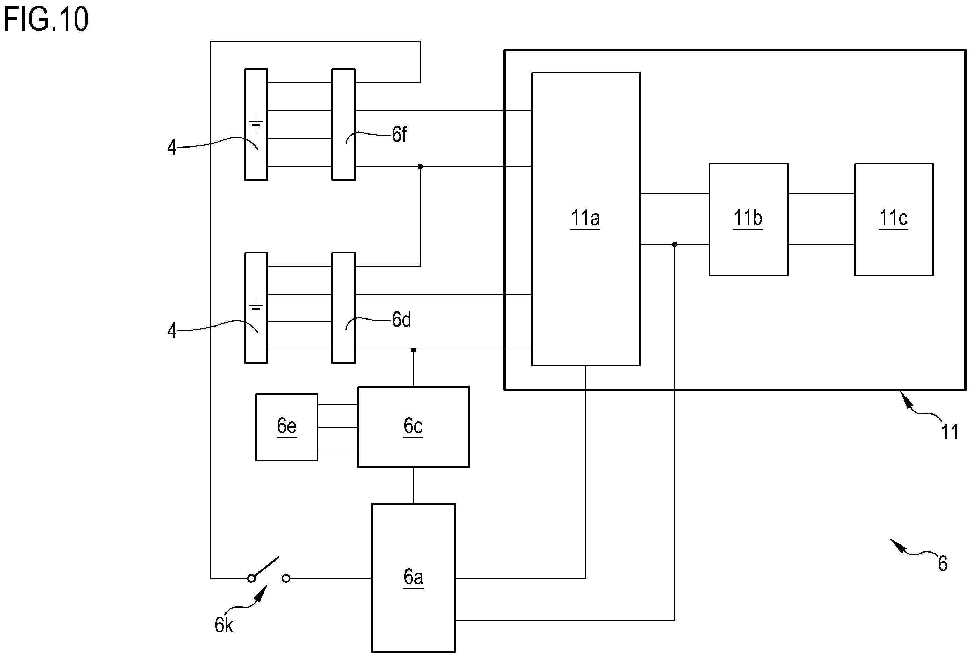

Figure 10 illustrates a circuit diagram of a non-limiting embodiment of the assembly formed by the power supply unit 11 and the battery charging unit 6. The power supply unit, which is arranged at the parking and/or charging installation, comprises: a charging adapter 11c, a charging port 11b and a control unit 11a. The charging adapter 11c can preferably accommodate a voltage transformer, in particular a voltage lowering transformer. The charging adapter 11c comprises a pair of inputs, in use removably connected to the mains voltage source, and a pair of outputs which supply the inputs of the charging port 11b.

The charging port 11b can allow the removable connection of the charging adapter 11c to the control unit 11a. In an embodiment, the charging port 11b comprises a pair of inputs in use directly supplied by the outputs of the charging adapter 11c and a plurality of outputs which go to supply the control unit 11a.

In an embodiment the control unit 11a comprises a pair of inputs which in use are directly supplied by the outputs of the charging port 11b and a plurality of outputs which supply electrical energy power to the rechargeable batteries 4. In particular, it should be noted that the control unit 11a is configured to be operatively connected to at least one pair of rechargeable batteries 4.

Preferably, but not limitedly, the control unit 11a is configured and specifically intended to supply electrical energy power to a first rechargeable battery 4 and a second rechargeable battery 4 so as to alternately charge them, switching the supply of electrical energy automatically from the first rechargeable battery 4 to the second rechargeable battery 4. In detail, the control unit 11a performs an automated procedure for which the switching between charging the first rechargeable battery to charging the second rechargeable battery occurs only when the first rechargeable battery 4 has assumed a first charge level R₁ (for example and not limitedly, 15% of the maximum recharging value) and/or when a first time T₁ has elapsed from the start time of charging the battery itself.

The technical features referred to in the preceding paragraph allow to limit the overall size and the power manageable by the electronics of the charging unit 11, which does not have to simultaneously recharge a plurality of rechargeable batteries, at least in the initial phases of the charging where the current absorption by the rechargeable batteries is greater.

The battery charging unit 6 comprises a switching circuit 6a, preferably a relay switching circuit, configured to prevent the actuation of the motor 6b which forms the power user 3 of the device for gardening and/or agriculture 1 when the rechargeable batteries 4 are being charged, i.e., when at least one of the two rechargeable batteries 4 depicted in figure 10 receives electrical energy from the power supply unit. In an embodiment, the relay is a traditional induction relay, but in an alternative embodiment such a relay is a solid-state relay.

The battery charging unit 6 comprises a discharge controller 6c. The discharge controller 6c comprises a control input, operatively controlled by an enabling output of the switching circuit 6a, which carries out the functions disclosed above. The discharge controller 6c comprises a set of three (in general a plurality) outputs directed to supply a power signal to the motor 6b.

The relay switching circuit is supplied by the control unit 11a, and therefore, indirectly (in the embodiment illustrated in figure 10), by the charging adapter 11c. Preferably the relay switching circuit is supplied in direct current (or voltage), and such direct current or voltage is taken from the charging adapter 11c and is therefore taken from a voltage lowering transformer, operating in alternating current, of the power supply unit 11 and from a rectifier stage (operating an AC - DC conversion) of the power supply unit 11.

In an embodiment, the excitation of the relay switching circuit, which determines the function of inhibiting the transmission of electrical energy to the power user, is automatically given by means of an electronic control signal exchanged between the battery insert 6f and the relay switching circuit, and such a control signal inhibits a power contact of the battery insert 6f which allows to provide electrical power to the power user.

The discharge controller 6c further comprises at least one power input receiving an electrical signal from the at least one rechargeable battery 4.

In a non-limiting embodiment, the discharge controller 6c is configured to regulate a power delivered to the motor 6b, and in particular a voltage and/or a current delivered to the motor 6b through the aforementioned outputs.

The battery charging unit 6 further comprises a pair of battery inserts 6f; there are two battery inserts 6f since there are two rechargeable batteries 4 connectable to the specific embodiment of the battery charging unit 6 of figure 10. In the event of a single rechargeable battery 4 connectable to the battery charging unit 6, there will be a single battery insert 6f.

The battery insert 6f comprises a pair of inputs supplied by the control unit 11a, a plurality of outputs supplying electrical energy power to the rechargeable battery 4 and also configured to be supplied by the electrical energy power of the rechargeable batteries 4 during the discharge step thereof.

Each battery insert 6f is also operatively connected to the discharge controller 6c and also to the switching circuit 6a, supplying the latter with a control signal which causes an excitation of the relay which in turn disconnects the power supply to the motor 6b, for example causing the switching of physical switches or the closure of a semiconductor switch channel (solid state). Each of the battery inserts 6f is configured to supply said control signal automatically immediately when receiving electrical power from the power supply unit.

It is observed that in a non-limiting embodiment, the controller 11a is configured and specifically intended to prevent a flow of electrical energy from the at least one rechargeable battery 4 to the charging adapter 11c; thanks to this technical feature, it is possible to reduce the risk of discharging the rechargeable batteries 4.

In light of the above description and in light of figure 10 it is thus clear that the first conditioning circuit comprises the control unit 11a, the charging port 11b and the charging adapter 11 while the second conditioning circuit comprises the battery inserts 6f, the discharge controller 6c and the switching circuit 6a.

In use, the physical connection between the battery inserts 5f and the control unit 11a is obtained when the device for gardening and/or agriculture 1 is connected on the above-mentioned installation at the engagement element 12.

Figure 8 illustrates a perspective view from behind a contact portion 10b in a particular embodiment provided with cable guide 10z. The cable guide 10z is in detail configured to retain in a predetermined position at least the power supply cable 50 in use sandwiched between said base portion 10a and said contact portion 10b; the latter is connected at a portion thereof, in particular at its end, to said electrical energy transfer element for electromagnetic coupling 11m and/or, as depicted in the specific embodiment of figure 8, to the male connector which forms a possible variant of said electrical energy transfer element for direct electrical coupling 11e.

The cable guide 10z can also be intended to accommodate and retain in the manners described above also an auxiliary conductor, in particular at least one among a hydraulic conductor, an electrical conductor, a conductor for optical signals.

The cable guide 10z is configured and specifically intended to prevent at least a relative translation of a portion of said electrical power supply cable 50 substantially positioned at, or enclosed within, said contact portion 10b. The cable guide 10z allows the electrical power supply cable 50 to exit from a bottom portion of the contact portion 10b.

In an embodiment, the contact portion 10b can comprise a service connector adapted to accommodate the end portion of the electrical power supply cable 50. The service connector can be arranged substantially at the rear portion of the contact portion 10b, and thus at a non-visible portion of the contact portion 10b. The service connector is removable with respect to the body of the contact portion 10b. It allows, when connected, to provide the electrical signal to the connector which makes said electrical energy transfer element for direct electrical coupling 11e or which alternatively makes said electrical energy transfer element for electromagnetic coupling 11m.

In a non-limiting embodiment, both the electrical energy transfer element for direct electrical coupling 11e and the electrical energy transfer element for electromagnetic coupling 11m, in addition to the power signal intended to cause the rechargeable battery to charge, can allow the transit of a control signal, of even significantly lower power with respect to the power of the power signal. The control signal is intended to allow the electronic identification of data thereof transmitted by the rechargeable battery and/or at least one among a recharge, voltage, current, unique identifier, temperature data value of the rechargeable battery.

In principle, both the electrical energy transfer element for direct electrical coupling 11e and the electrical energy transfer element for electromagnetic coupling 11m make bidirectional connectors, i.e., capable of transporting electrical, power and/or control signals, to or from the rechargeable battery.

In a non-limiting embodiment, the service connector is accommodated substantially at the cable guide 10z.

Preferably but non-limitedly, the service connector is configured to be removably extractable from the body of the contact portion 10b by means of at least one among:
- a rotation movement;
- a translation movement, in particular axial translation along a parallel or inclined direction with respect to a plane on which the rear portion of the contact portion 10b lies.

Returning again to the device for gardening and/or agriculture 1, it comprises:
- a body 2 configured to accommodate and/or retain an electrical power user 3;
- at least a first rechargeable battery 4 operatively connected to said electrical power user 3.

It should be noted that the term "accommodate and/or retain" is used for the following reasons. In some types of device for gardening and/or agriculture 1, such as a rigid conduit blower, the power user 3 (electric motor and related coupled fan) is conveniently completely enclosed within the body 2. In a different, non-limiting embodiment, in which the device for gardening and/or agriculture 1 takes the form of a brush cutter, for example, the power user can be housed in an end portion thereof, for example at an end portion of an extension tube separating the cutting head, directly connected to the electric motor, from the body 2 of the device which, in this case, can also be worn as a rucksack. In the latter case it is clear that the power user is not - strictly speaking-contained in the body 2 but is retained there albeit movably through a flexible connection.

In order to allow the removable coupling of the device for gardening and/or agriculture device 1 to the parking installation 10, 10a, 10b, the device for gardening and/or agriculture 1 comprises at least one coupling element 5 configured to removably couple on said parking installation 10, 10a, 10b to obtain the removable retention of the device for gardening and/or agriculture device 1.

In an embodiment, the coupling element comprises a pair of guides which are arranged in a fixed position on the body 2 of the device for gardening and agriculture, and which are configured to removably engage with the aforementioned guides.

Alternatively, the coupling element 5 comprises one among a pin and/or a recess configured to mutually couple with a respective recess and/or pin of the parking installation 10, 10a, 10b.

Preferably but not limitedly, the coupling element 5 is arranged in a fixed position on the body 2. In an embodiment the coupling element 5 is made integrally on the body 2. This is particularly true where the body 2 is made of plastic; it is in fact possible, at least in this case, to make the body 2 and the coupling element 5 in a single production process, with a significant advantage in terms of production times of the body 2 - coupling element 5 assembly, and with a good quality combined with a reduced cost.

In particular, where the weight of the device for gardening and/or agriculture 1 is high, in an embodiment the coupling element 5 can be reinforced with portions of metallic material.

The body 2 of the device 1 for gardening and/or agriculture 1 can comprise a fully closed compartment, e.g., waterproof, for containing at least one rechargeable battery 4 in a predetermined position and/or spatial orientation with respect to the body 2. In an embodiment, the rechargeable battery 4 can be provided with a body which is in turn waterproof, to protect the inner cells.

At a substantially accessible portion of the body 2, and in particular at the coupling element, the device for gardening and/or agriculture 1 can comprise an electrical energy transfer element for electromagnetic coupling and/or an electrical energy transfer element for direct electrical coupling.

The electrical energy transfer element for electromagnetic coupling and/or electrical energy transfer element for direct electric coupling makes the removable connection which persists between the power supply unit 11 and the battery charging unit 6

In an embodiment, the battery charging unit 6 is arranged substantially integrally within the body 2; thanks to this technical feature, the contact of sensitive portions of the electronics of the battery charging unit 6 with the external environment is prevented.

Preferably, but not limitedly, the battery charging unit 6 is a low voltage unit. For the purposes of the present disclosure, "low voltage" means a voltage less than 50V if continuous or 75V RMS if sinusoidal alternating. Thanks to this technical feature, the device for gardening and/or agriculture 1 which is the subject matter of the present disclosure is safer to use, since there are components, including batteries, therein which do not have significantly high voltages to the point of needing design adjustments to protect the user and/or the operation of the device itself.

In particular, where the battery charging unit 6 is of the direct voltage type, this technical feature allows the device for gardening and/or agriculture 1 to be relieved of the weight of the transformer which remains associated with the receiving unit 10, 10a, 10b. This technical feature is particularly important where the device for gardening and/or agriculture 1 is of the hand-held type, because it facilitates use by people of low strength, and aids prolonged use with reduced effort.

Preferably, but not limitedly, the battery charging unit 6 is configured to allow an operating disconnection and an operating reconnection of said at least a first rechargeable battery 4 when powered by said power supply unit 11. This means that when the device for gardening and/or agriculture 1 which is the subject matter of the present disclosure is operatively coupled with the parking and/or charging installation 10, 10a, 10b and the latter is - through the power supply unit 11 and the battery charging unit 6 - recharging the at least one rechargeable battery 4, it is possible - keeping the device for gardening and/or agriculture 1 coupled to the parking and/or charging installation 10, 10a, 10b, to remove the at least one rechargeable battery 4 from the housing on the body 2 without interrupting the electrical energy supply to the power supply unit 11. The device for gardening and/or agriculture 1 becomes a kind of charger capable of allowing what is known as "hot" connection and disconnection, i.e., with power supply unit 11 and/or with battery charging unit 6, powered.

The battery charging unit 6 can be configured to electronically read a charge level of said at least a first rechargeable battery 4, in particular when operatively connected to the device for gardening and/or agriculture 1 and appropriately housed in its update.

The battery charging unit can optionally be configured to interrupt a power supply of said at least a first rechargeable battery 4 when the charge level exceeds a preset threshold. Thanks to this technical feature, the risk of overcharging, fire and/or explosion of the batteries is reduced.

The invention is not limited to the embodiments illustrated in the attached figures; for this reason, the reference numerals in the claims are to be understood as having no limiting effect, and are therefore provided only to increase the intelligibility of the claims.

It is finally evident that additions, modifications or variations can be applied to the present invention, without departing from the scope of protection provided by the appended claims.

## Claims

1. Device for gardening and/or agriculture (1), configured to be removably retained by a parking and/or charging installation and comprising:
- a body (2),
- an electrical power user (3) housed in said body (2) and/or constrained to said body (2),
- at least one rechargeable battery (4) operatively connected to said electrical power user (3) and
- at least one coupling element (5) configured to removably couple with said installation to make a removable retention of the device for gardening and/or agriculture (1),
**characterized in that** it further comprises a battery charging unit (6), operatively connected to said at least one rechargeable battery (4) and housed at least partially, preferably integrally, within said body (2).

2. Device for gardening and/or agriculture (1) according to claim 1, wherein said at least one rechargeable battery (4) is removably retained by said body (2), said body (2) comprising at least one constraining element (7), in particular housing, configured to constrain said at least one rechargeable battery (4) in a predetermined position and/or spatial orientation with respect to said body (2), said at least one rechargeable battery (4) preferably being a Lithium-ion battery, in particular wherein said constraining element (7) is substantially closed and/or configured to isolate said at least one rechargeable battery (4) in a watertight manner and/or in particular wherein said at least one rechargeable battery (4) is a watertight battery.

3. Device for gardening and/or agriculture (1) according to one or more of the preceding claims, wherein said battery charging unit (6) is a low voltage unit, configured to be powered by a power supply unit (11) comprising a voltage lowering transformer, and/or is a direct voltage unit, configured to be powered by a power supply unit (11) comprising an AC to DC voltage converter, wherein said power supply unit (11) is operatively coupled with said installation, optionally said power supply unit (11) being at least partially housed in said installation.

4. Device for gardening and/or agriculture (1) according to one or more of the preceding claims, wherein said battery charging unit (6) is configured to allow an operating disconnection and an operating re-connection of said at least one rechargeable battery (4) when powered by said power supply unit (11), said battery charging unit (6) being configured to be powered by means of wireless electromagnetic coupling with said power supply unit (11) and/or to be powered by direct electrical coupling with said power supply unit (11).

5. Device for gardening and/or agriculture (1) according to one or more of the preceding claims, wherein said battery charging unit (6) is configured to electronically read a charge level of said at least one rechargeable battery (4) and to interrupt a power supply of said at least one rechargeable battery (4) when said charge level exceeds a preset threshold.

6. Device for gardening and/or agriculture (1) according to one or more of the preceding claims, configured to allow to charge said at least one rechargeable battery (4) by means of an external charging unit (20), optionally alternatively to charging said at least one rechargeable battery (4) by means of said battery charging unit (6), in particular wherein said charging of said at least one rechargeable battery (4) by means of said external charging unit (20) presupposes an operating connection between said at least one rechargeable battery and said external charging unit.

7. Device for gardening and/or agriculture (1) according to one or more of the preceding claims, configured to be hand-held and/or to be at least partially worn, said device for gardening and/or agriculture (1) preferably being a device for cutting the lawn, in particular a lawnmower, optionally automatic, or device for trimming lawns and hedges, in particular a hedge trimmer or a turf trimmer or a brush cutter, or a device for timber and pruning, in particular a branch cutter, or a bio-grinder, or a chainsaw, or a cleaning device, in particular a blower or aspirator, or a shredder, or a pressure washer, or a sweeper or a snow plough, or a device for preparing soil, in particular an aerator or scarifier or a tiller, or a device for irrigating or distributing substances, in particular a sprinkler, or a pump or an atomiser, or a pump for distributing anti-fungal substances, or a device for scanning and/or inspecting soils, in particular a device for searching for metals, wherein said coupling element comprises at least one among a pin, a recess, at least one guide and is configured to removably couple with a respective recess, pin or counter-guide obtained on said installation, said coupling element being made of one among a plastic material, metal material or fibreglass material and/or comprising at least one reinforcement portion in metal material.

8. Parking and/or charging installation configured to cooperate with a device for gardening and/or agriculture (1) according to one or more of claims 1 to 7, wherein the installation comprises:
- a casing,
- a power supply unit (11) at least partially housed in said casing and configured to provide electrical power to a battery charging unit (6) of said device for gardening and/or agriculture (1) with an electrical signal intended for charging at least one battery of said device for gardening and/or agriculture (1), and
- an engagement element (12), in particular a housing, associated with said casing and configured to establish a removable engagement with at least part of said device for gardening and/or agriculture (1) in at least one predefined positional relationship with respect to said casing.

9. Installation according to claim 8, wherein said power supply unit (11) comprises a first electronic conditioning circuit of said electrical signal, said first electronic conditioning circuit being configured to cooperate with a second conditioning circuit of said electrical signal, said second conditioning circuit of said electrical signal being accommodated on said battery charging unit (6).

10. Installation according to claim 8 or claim 9, wherein said power supply unit (11) is a wireless power supply unit comprising an electrical energy transfer element for electromagnetic coupling (11m) and/or is a power supply unit for direct electrical coupling comprising an electrical energy transfer element for direct electrical coupling (11e), said electrical energy transfer element for electromagnetic coupling (11m) and/or electrical energy transfer element for direct electrical coupling (11e) transferring, in use, electrical energy by electromagnetic wireless coupling and/or by direct contact, in particular wherein said electrical energy transfer element for electromagnetic coupling (11m) and/or said electrical energy transfer element for direct electrical coupling (11e) is a bipolar element and is configured to transport a first electrical or electromagnetic power signal for recharging said at least one rechargeable battery (4) and a second control signal for controlling said at least one rechargeable battery (4).

11. Installation according to one or more of claims 8 to 10, wherein said engagement element (12) comprises at least one positioning member such as a guide and/or a recess and/or a protrusion and wherein an operating mutual coupling position between said device for gardening and/or agriculture (1) and said installation is defined by an abutment (12r) arranged adjacent to said engagement element (12), wherein, in said operating mutual coupling position, said device for gardening and/or agriculture (1) is in a predefined spatial arrangement with respect to said installation, in particular wherein said electrical energy transfer element for electromagnetic coupling (11m) and/or said electrical energy transfer element for direct electrical coupling (11e) is arranged substantially at said abutment (12r) and/or in particular wherein said installation comprises detection means adapted to discriminate said operating mutual coupling position from different positions of said device for gardening and/or agriculture (1) with respect to said installation and wherein said installation is configured to subordinate an electrical power supply to said device for gardening and/or agriculture (1) by means of said power supply unit (11) upon a detection of said mutual coupling position by means of said detection means.

12. Installation according to one or more of claims 8 to 11, wherein said engagement element (12) accommodates said electrical energy transfer element for electromagnetic coupling (11m) and/or for direct electrical coupling (11e), preferably in a protected position, wherein said installation is configured to bear the weight of said device for gardening and/or agriculture (1), optionally wherein in said operating mutual coupling position said device for gardening and/or agriculture (1) is hung on said installation and/or optionally wherein said installation is configured to be hung on an infrastructure such as a wall or a pole.

13. Installation according to one or more of claims 8 to 12, wherein said installation comprises a base portion (10a), preferably configured to be fixed to a wall and at least one contact portion (10b) having said engagement element (12), wherein said base portion (10a) is provided with a plurality of seats (10s) for a plurality of said contact portions (10b), optionally wherein said base portion (10a) is configured to simultaneously accommodate a plurality of said contact portions (10b) and/or to accommodate said contact portion (10b) at a plurality of distinct positions determined by said seats (10s), in particular wherein said seats (10s) are arranged along a predefined alignment direction and wherein said contact portion (10b) comprises at least one coupling element configured to couple with said seats (10s) and removably operatively connectable to at least one seat of said seats (10s).

14. Installation according to one or more of claims 8 to 13, wherein said engagement element (12) is configured to allow a translation, preferably substantially linear, of said device for gardening and/or agriculture (1) with respect to the body of said installation (10, 10a, 10b), said engagement element (12) comprising a first and a second guide opposite each other, adapted to define a translation direction for said device for gardening and/or agriculture (1), and/or is configured to allow a rotation, preferably a rotation along an oblique direction with respect to said translation, of said device for gardening and/or agriculture (1) with respect to the body of said installation (10, 10a, 10b).

15. Installation according to one or more of claims 8 to 14, wherein at least one among said base portion (10a) and said contact portion (10b) comprises at least one respective cable guide (10z, 10k) configured to retain an electrical power supply cable, configured to transmit said electrical signal, optionally an electrical power supply cable (50) in use sandwiched between said base portion (10a) and said contact portion (10b) and connected:
- at a first portion thereof, to said electrical energy transfer element for electromagnetic coupling (11m) and/or to said electrical energy transfer element for direct electrical coupling (11e) and
- at a second portion thereof, distinct from said first portion, to said power supply unit (11),
optionally wherein said cable guide (10z, 10k) is configured to further retain an auxiliary conductor, in particular at least one among a hydraulic conductor, an electrical conductor, a conductor for optical signals, and/or optionally wherein said cable guide (10z, 10k) is configured to prevent at least one relative translation of a portion of said power supply cable substantially positioned at, or enclosed within, said at least one among said base portion (10a) and said contact portion (10b).
